# EUROPEAN PATENT SPECIFICATION

(11) **EP 3 716 420 B1**
(45) Date of publication and mention of the grant of the patent: **21.07.2021**
(21) Application number: 20152005.3
(22) Date of filing: 15.01.2020
(51) Int. Cl.: H02B 1/00, H02G 5/06, H02M 1/00, H01B 3/40, H01B 3/44, H01B 7/00, H01B 9/02, H01B 3/28, H01B 5/06

(54) **CURRENT CONDUCTOR**
STROMLEITER
CONDUCTEUR DE COURANT

(30) Priority: 28.03.2019 RU 2019107944
(43) Date of publication of application: 30.09.2020
(73) Proprietor: Danielian, Nikolai, Kerpen (DE); Yashina, Fatima Ferkhatovna, Moscow 119192 (RU)
(72) Inventor: DANIELIAN, Nikolai, Kerpen (DE); YASHINA, Fatima Ferkhatovna, 119192 Moscow (RU); GALSTYAN, Gagik Gamletovich, 142500 Moscow Oblast (RU)
(74) Representative: Fortuna, Jevgenijs

(56) References cited:
- WO-A1-99/28929
- WO-A1-2017/062255
- CN-A- 105 931 700
- US-B1- 6 284 374

## Description

### Technical Field

This technical solution belongs to means of power transmission from a current source to a consumer, in particular, to current conductors. It is intended for use in electrical engineering and construction.

### Background Art

A layered design of a current conductor is known from foreign patent documentation, which consists of at least three extruded layers of a polymer-based material where an intermediate layer (4) between the first layer (3) and the second layer (5) is dually connected with the first layer (3) and completely connected with the second layer (5) so that the second layer (5) together with the intermediate layer (4) is easily separated from the first layer (3). The invention belongs to an insulated electrical cable where the layered structure is formed by coaxial layers around the conductor-core (1), whereas the first layer (3) is an internal layer of an insulation material, an intermediate layer (4) is made of any insulation material or of a semi-conductive screening material, and the second outer layer (5) is made of a semi-conductive screening material. Preferably, the additional layer (4) made of a semi-conductive screening material is located between the conductor-core (1) and the first layer (US 4767894A, August 30, 1988, B32B15/02).

The patent document US 4767894A describes a current conductor design where a round cross-section conductor is located in the first layer (3), the thickness of the first layer is higher than that of the second layer, and the layer (5) is a protective layer located around the intermediate layer (4) and the covering layer (4) so that the layer (5) forms a protective jacket.

US4767894A also describes that the current conductor has three layers of polymer-based materials extruded around the electrical conductor, whereas two adjacent layers of polymeric layers are attached to each other, and for MV and HV applications, the cable usually has a conductor with a central core coaxially surrounded (sequentially) by a semi-conductive polymeric screening layer, a polymeric primary insulation layer, and an extremal semi-conductive polymeric screen, as well as a shielding insulation layer covering the insulation. There can also be an outer metallic conductor (such as a neutral conductor) covering or embedded into the outer semi-conductive screening made, for example, as braided wires or metallic tape. The cable can also be equipped with a reinforcing coating and additional layers, for example, to ensure protection against atmospheric exposure or high mechanical strength. Preferably, annular surfaces of polymeric layers are smooth and concentric. Layers are preferably formed by extrusion. An internal semi-conductive polymeric screening layer, a polymeric primary insulating layer and an overlaying semi-conductive screening layer of the electrical cable form a coaxial layered structure and can be applied on a metallic conductor using extrusion coating technologies well known in this art. One or several layers in the layered structure can be linked with each other. Preferably, for splicing or terminating cables, the outer semi-conductive screening layer must be relatively easily separated from the primary insulating layer leaving low-conductive or non-conductive remainder stuck to the primary insulation and not damaging the primary insulation surface. Nevertheless, the outer semi-conductive screening layer must be sufficiently linked to the primary insulation so that these two layers would not separate during insulation and operation and to prevent penetration of contaminants, such as air or water, between layers. Combinations of primary insulating materials and semi-conductive screening materials have the desired characteristics of mutual binding/separation. However, these laminated combinations of materials that have been developed in the prior art have a drawback because they usually require a semi-conductive material having a relatively high price and/or poor physical, chemical or mechanical performance. For example, if the used semi-conductive screening layer is relatively hard, it is often quite hard to separate it from the primary insulation and it might be necessary to use a manual tool to cut the semi-conductive screening layer to the primary insulation to facilitate stripping. Using this tool to cut the semi-conductive screening layer may cause damages to the outer surface of the primary insulation. If the semi-conductive screening layer is relatively soft, it may tend to rupture when stripping primary insulation. In accordance with the described analog, the current conductor contains at least three extruded layers of a polymer-based material, whereas the intermediate layer between the first layer and the second layer is attached to the first layer and fully linked to the second layer so that the second layer with almost the entire intermediate layer is easily stripped from the first layer. A preferable embodiment of the invention suggests an insulated cable comprising a conductor of an electrical core essentially extruded coaxially around the conductor, a laminated structure comprising at least three layers of a polymer-based material characterized in that the first layer is the internal layer and represents a layer of an insulating material, an intermediate layer represents a layer of a semi-conductive screening material or insulating material, whereas the second layer represents an outer layer of a semi-conductive screening material, whereas the intermediate layer is linked with the first layer and completely linked with the second layer so that the outer semi-conductive screening material together with the entire intermediate layer can be easily stripped from the insulating material. The insulated cable can additionally comprise an additional layer made of a semi-conductive screening material between the electrical core conductor and the insulation material first layer. In the preferable embodiment of this invention, the first layer insulation material is usually selected from well-known primary insulation materials including, for example, polyethylene, copolymers of polyethylene, EPR or EPDM, whereas this material is cross-linked. The layer containing an outer layer of semi-conductive screening in the preferable embodiment (e.g., the second layer) is preferably cross-linked and can be made of any suitable polymeric composition that can be completely bound with the intermediate layer. Examples of polymers suitable for using for the second layer are low-density polyethylene, low-density linear polyethylene, copolymer of ethylene/vinyl acetate, copolymer of ethylene/ethyl acrylate, high-density polyethylene, EPDM and a mixture of these materials. As shown above, the first layer of insulation material and the second layer of semi-conductive screening are preferably made of cross-linked materials. In this manner, polymer-based materials that are prepared for use as the first and/or second layer represent, for example, peroxide-linked compositions comprising the primary polymer and a peroxide-linking agent. Suitable polymers for the first and/or second layer also include silyl-modified polymers that are cross-linked when treating with water/silanol condensation catalyst. Silyl-modified polymers include, for example, ethylene copolymers with non-saturated silaned compounds; graft polymers obtained by grafting non-saturated hydrolyzed silaned compounds to polyethylene and other suitable polymers; or polymers that have hydrolyzed groups introduced into them by interesterification. When the polymeric composition used in the manufacturing of the first and/or second layer contains a silyl-modified polymer, the composition preferably contains a suitable amount of the silanol condensation catalyst. When it is desirable to use a silyl-modified polymer, it can be obtained during extrusion, for example, using a well-known Monosil process where the primary polymer is fed to the extruder with a composition containing a peroxide grafting initiator, a hydrolyzed non-saturated silan and a silanol condensation catalyst. Preferably, the same method of cross-linking is used for each level so only one stage of linking is required, for example, all layers are peroxide-linked or all silanes are cross-linked. To make the composition for the second layer semi-conductive, it must include an electrically conductive material. Using technical carbon in semi-conductive screening compositions is well known in this art, and any such technical carbon in any suitable form can be used. An intermediate layer used in this invention can represent either a semi-conductive layer or an insulating layer. A significant attribute of this invention is that the intermediate layer material is selected such that it can be completely bound with the second layer but it does not form a removable link with the first layer. Consequently, the selection of a suitable material for an intermediate layer depends first of all on the nature of the first and second layers and insignificantly depends on the cable manufacturing process. Polymeric compositions having desirable characteristics of transmissivity suitable for the manufacturing of an intermediate layer are, for example, ethylene/vinyl acetate copolymer, ethylene/ethyl acrylate copolymer, acrylonitrile rubbers, alloys of the above polymers or a mixture of these copolymers with low-density polyethylene or low-density linear polyethylene. A composition that has been found to be especially suitable for use as an intermediate layer represents a mixture containing ethylene/vinyl acetate copolymer and acrylonitrile rubber. Preferably, the concentration of vinyl acetate in this composition is at least 28 wt% of the total weight of ethylene/vinyl acetate copolymer and acrylonitrile rubber and is preferably 30 to 45 wt%. If the intermediate layer must be semi-conductive, it must include an electrically conductive material such as, for example, technical carbon. Such semi-conductive compositions are commercially available, for example, BPH 310ES and BPH 315ES by BP Chemicals. However, an aspect of this invention is that the layer that is bound to the insulation layer may not be a semi-conductive material. Suitable compositions for use as an intermediate layer that are not semi-conductive are also commercially available, for example, ethylene/vinyl acetate copolymers; EVATENE supplied by ICI/ATO, LEVAPREN supplied by Bayer & Co, OREVAC supplied by ATO, and ESCORENE supplied by Esso Chemicals whose trademarks are EVATENE, LEVAPREN, OREVAC, and ESCORENE. A polymer-based material used as an intermediate layer can be cross-linked. The relation between the thickness of the second layer and the thickness of the intermediate layer is preferably between 10:1 and 1:1. For a universal MV or HV cable, the absolute thickness of an intermediate layer is usually within 0.01 to 2.0 mm, preferably 0.1 to 0.5 mm. As shown above, the intermediate layer is preferably cross-linked. However, a relatively thin layer of a polymer-based material is preferable as in this invention, whereas this layer contains a peroxide cross-linking agent and may have a trend for preliminary cross-linking. In the embodiment of this invention, the first and second layers contain a peroxide cross-linking agent, a polymer-based material used as an intermediate layer that does not contain a peroxide cross-linking agent, but is linked by diffusion of the linking agent from the first and second layer. The insulation layer and the semi-conductive layer can be applied over the cable using regular methods such as tandem extrusion or co-extrusion. Preferably, the first, intermediate and second layers are simultaneously co-extruded. Preferably, in accordance with the preferable embodiment, the cable comprises a conductor with a metallic core surrounded by an additional layer of semi-conductive screening, whereas the first, intermediate and second layers are simultaneously extruded over that additional semi-conductive layer. Preferably, an additional layer of the semi-conductive screening material between the conductor and the first layer of the insulation material can be a regular material. It is convenient when a preferable additional layer of a semi-conductive screening material has the same composition as the outer layer (the second layer) of the semi-conductive screening layer. In accordance with this invention, the insulated cable can have other regular layers such as a neutral conductor, armored coating and coatings protecting against atmospheric precipitation. In accordance with this invention, the cable insulation design provides multiple advantages as compared to regular cable insulation. The following can be used as a semi-conductive material for the layer 2 in a comparative cable and the layers 2 and 5 in Example 1 having composition as follows: EAOC copolymer - 61.22 parts by weight; soot (class P) - 37.78 parts by weight; antioxidant (DQA) - 0.4 parts by weight; peroxide hardener - 0.9 parts by weight, whereas EEA copolymer represents an ethylene/ethyl acrylate copolymer obtained by high-pressure polymerization canalized by free radicals. It contains 18 wt% of ethyl acrylate, has a melt index ca. 6 and a density of 0.93. DQA represents dihydro trimethyl quinoline. (b) the insulation material used as the layer 3 in a comparative cable and in Example 1 is a commercially available material supplied by BP Chemicals under the trademark HFDM 4201 and comprising: HDPE - 97.92 parts by weight; antioxidant - 0.18 parts by weight; peroxide hardener - 1.9 parts by weight. LDPE represents low-density polythene with a melt index of 2.0 and a density of 0.92 manufactured by the method of catalyzing by high-pressure free radicals. (c) removable semi-conductive material: the layer 4 in a comparative cable and in Example 1 represents a commercially available material supplied by BP Chemicals under the trademark BPH 315ES Black comprising ethylene/vinyl acetate copolymer containing 45 wt% of vinyl acetate and having a density of 0.985, Mooney viscosity of 20 (ML4'-100°C), acrylonitrile rubber, soot, peroxide hardener and regular additives (US4767894A, August 30, 1988).

A current conductor is known that has a copper or aluminum core filled into a packing substance or composition containing epoxy resin injected under high pressure. The core formed by conductors embedded into the packing substance is surrounded by a layer of semi-conductive polyethylene made by adding carbon powder. This layer of semi-conductive polyethylene is surrounded by insulation polyethylene. It is followed by aluminum or copper screen with lateral corrugations. Gaps between the outer surface of the polyethylene insulator and screen corrugations are filled with a substance of the same composition as the one surrounding conductors, whereas the cable can additionally have an outer sheath reinforced by a steel wire (US4435613A, H01B1/24, March 6, 1984 - analog).

The patent application EP3421523A1 Reactive Composition Based on Ethylene-Vinyl Acetate also gives an example of a cable for medium voltage 6-36 kV and high voltage above 36 kV where the electrical conductor is covered by an internal semi-conductive layer followed by an insulating layer, then a semi-conductive layer, then optional layer(s) such as water barrier layer(s) and outer layer(s) forming a sheath. Cable layers are usually based on various types of ethylene polymers. The insulating layer and semi-conductive layers usually consist of homo- and/or copolymers of ethylene that are preferably cross-linked. LDPE (low-density polythene, e.g., polythene manufactured by high-pressure radical polymerization) is cross-linked by peroxide such as dicumyl peroxide. An internal semi-conductive layer usually contains an ethylene copolymer such as ethylene-vinyl acetate copolymer (EVA), ethylene-methyl acrylate copolymer (EMA), ethylene-ethyl acrylate copolymer (EEA), ethylene-butyl acrylate copolymer (EBA), a cross-linking agent (for example, peroxide) and a sufficient amount and type of a conductive filler to make the composition semi-conductive. The composition of the outer semi-conductive layer may differ from that of the internal semi-conductive layer depending on whether it must be removable or non-removable. In addition to the semi-conductivity of layers, it is desirable that the outer semi-conductive layer could be removed from the insulating layer to facilitate the connection of two cable ends. This capability of removal is achieved by attaining higher polarity for the outer semi-conductive layer (for example, using a polar copolymer such as EVA) than in the underlying insulating layer and by cross-linking the outer semi-conductive layer. The patent describes a current conductor with a semi-conductive layer containing an acetyl vinyl acetate-based composition. Furthermore, a polymeric composition can additionally contain additives such as antioxidants, fire retarders, agents modulating cross-linking (such as boosters or inhibitors), stabilizers, process additives, lubricants, compatibilizers, dividing agents, fire-retardants, acid acceptors, non-organic fillers, voltage stabilizers, additions to improve water resistance or their mixtures (EP3421523A1, January 2, 2019).

Another current conductor contains a sheath of the first material and a dividing gasket applied over the sheath of the second material differing from the first material, and a sheath of the third material, whereas the dividing layer is made of a cross-linked second material and located between sheaths. The dividing layer may contain an UV-hardened second material; acrylate can be used as the second material. The layer thickness is at least 10 µm to preferably 100 µm, whereas the layer thickness is, in particular, 20 µm to 70 µm and especially 30 µm to 40 µm; at least one thermoplastic material is used as the first material, which is selected from the group consisting of cross-linked polyethylene (PE-X), polypropylene (PP), cross-linked ethylene-vinyl acetate (EVA) and polyvinyl chloride (PVC). At least one thermoplastic elastomer (TPE) is used as the third material, which is selected from the group consisting of TPE-O, TPE-S, and TPE-U. The current conductor may contain a lot of linear elements each having a coating applied on the dividing layer of the sheath and jointly surrounded by the sheath. At least one linear element can be made as a core with an internal conductor and sheath. The second cross-linked material is applied over the body forming a dividing layer and then cured, and the sheath is applied. The dividing layer is cured by UV-radiation. As linear elements, cores with an internal conductor and sheath are used, whereas a multitude of wires is prepared with a division layer, then several wires are combined and surrounded by a sheath.

A current conductor is also known that comprises conductors located in insulation layers, whereas this current conductor is equipped with a semi-conductive layer (14) around conductors, a high-voltage insulation casing (15), an outer semi-conductive layer (16), a protective layer (17), and a sheath (18). High-voltage insulation (15) consists of an insulating composition containing 0.5-5 parts by weight of non-organic filler to 100 parts by weight of olefin polymer and an average dispersive diameter of a grain of the non-organic filler is 1 µm and less than the indicated value (WO2010090034A1, August 12, 2010).

A current conductor is also known (variants) that contains at least a pair of current-carrying conductors located in the common array of electrical insulation based on epoxy resin, with through holes made in the insulation array that are located in sequence along the current conductor length between conductors. The current conductor provides protective screens located below and above the current conductor and each protective screen has a pair of inclined faces converging to the screen center and stretched along the current conductor at an angle to the current conductor lateral axis. The current conductor comprises shaped elements having the first and second chutes to attach the protective screen, and a T-groove to attach the current conductor to structural supports (RU634919C1, November 8, 2017 - analog).

A current conductor is also known that is developed by RTK-ELEKTRO-M and comprises a current-conducting bus made of an aluminum tube or copper tube or rod, with a graphite layer located on the bus surface, around which current-conducting layers of conductive paper are coiled, and current-insulating layers of insulating paper are coiled around conducting layers, whereas an aluminum layer of foil is coiled on the last conductive layer, where copper stripes of copper foil are placed, which are located from opposite sides of the bus, a layer of insulating paper is coiled on copper stripes, which has a heat-shrink flexible tube in the middle part, an end heat-shrink flexible tube is located on each end part of the section, which is overlapped on the middle heat-shrink pipe, all the above-mentioned layers are made of paper, gaps between layers and gaps between heat-shrink tubes are filled with cured epoxy resin, and connections between heat-shrink tubes are tight, a protective steel tube is located around heat-shrink tubes, and all the above layers of the sections are located along the bus length between flanges of its contacts. The section provides a grounding contact connected with the above copper stripes, whereas the grounding contact is located on the outer surface of the steel protective pipe. The section provides a grounding contact connected with the above copper stripes, whereas the grounding contact is located on the outer surface of any heat-shrink pipe. The bus made of an aluminum tube has a wall thickness of 15-25 mm, and the bus made of a copper tube has a wall thickness of 10-20 mm. The insulating layer is made of embossed craft paper with a specific gravity of 100-120 g/m² and a layer thickness of 0.15-0.5 mm. Epoxy resin comprises a plasticizer ensuring permanent resin viscosity at 20-80 °C and its gradual curing at gradual temperature rise to 130-150 °C. Each end heat-shrink tube has thermal shrinkage capability reducing its diameter when heated, whereas this property of the end tube exceeds the thermal shrinkage property of the middle heat-shrink tube. A sealing tape made of isobutene polymer is attached to connections between heat-shrink tubes (RU 2439764 C1, January 10, 2012 - close analog).

A current conductor manufactured by RTK-ELEKTRO-M is known, which comprises a current-carrying bus of round cross-section covered by a layer of hard insulation of various thicknesses depending on the level of voltage whereas semi-conductive layers and a grounding layer are located inside the insulation layer (Yandex. RTK-ELEKTRO-M. Type TPL current conductors manufactured in Russia. Design. Designs of current conductors, 2018 - close analog).

A current conductor is known, which contains a conductor located in semi-conductive layers of insulation, a grounding layer located outside of semi-conductive layers, whereas all current conductor layers are located in the cured insulation (Yandex. Design of current conductors. Design TPL molded current conductor manufactured by RTK-ELEKTRO-M. Design of current conductor section, Machinepedia.org, May 4, 2013 - close analog).

A current conductor section is known, which is developed by RTK-ELEKTRO-M and intended to increase the fire resistance of the section under excessive heating and comprising a current-conducting bus located in the electrical insulation with contacts on ends, a grounding screen that covers the entire bus electrical insulation, and a metallic housing with an outer fire-protective coating, whereas a fire-protective layer made of cured composite material is located between the metallic housing and the grounding screen, which includes a binder and a heaving filler forming hollows in the fire-protective layer when the section is exposed to temperature. The thickness of the fire-protective layer is 3.0-25 mm. The composite material comprises epoxy resin with hardener as a binder and heaving graphite as a filler, at the ratio (wt%) as follows: graphite 5-60, the rest for resin. Heaving graphite has been selected with a particle size of 0.5-0.8 mm (RU2610478C1, February 13, 2017 - closest priort art solution).

### Disclosure of the Invention

Common attributes of the closest prior art and the claimed current conductor are such that the current conductor is made of a tubular conductor located in insulation layers interconnected and concentrically located around the conductor, in sequence from the conductor center.

The closest prior art does not meet new requirements applied to current conductors in terms of moisture and water protection, insulation material elasticity affecting the required installation flexibility of the current conductor and its installation quality.

Other disadvantages of the closest prior art is a comparatively high labor input for manufacturing a current conductor related to time-consuming processes of forming an insulation layer. The above disadvantages are directly and indirectly related to the quality of current conductors and their operation reliability.

The technical result of the described invention is a simplified design of a current conductor and its increased reliability.

The technical result is achieved by the current conductor made of a tubular conductor located in insulation layers interconnected and concentrically located around a conductor, in sequence from the conductor center, whereas the outer surface of the conductor provides an internal semi-conductive layer of ethylene-vinyl acetate, the internal semi-conductive layer provides an insulation layer made of ethylene-propylene rubber, the insulation layer provides an outer semi-conductive layer of ethylene-vinyl acetate where a layer of epoxy resin is located, which is cured to elasticity and flexibility, the epoxy resin layer provides a grounding element made as a copper perforated shell, the epoxy resin layer on the outside provides a protective sheath enclosing this layer under pressure, whereas all layers of the current conductor and the grounding element are interconnected and compressed by the protective sheath by forces directed to the center of the current conductor. The protective sheath is made of a heat-shrink material and forms an external layer of a current conductor. The protective sheath is made of a heat-shrink material and a tubular element made of a non-magnetic material and located on it on the outside.

The wall thickness of the conductor is 7.0-25 mm whereas its internal diameter is 25-50 mm, the internal and outer semi-conductive layers have a thickness of 0.2-20 m, and the insulation layer has a thickness of 5-30 mm.

The internal and outer semi-conductive layers are made of ethylene-vinyl acetate comprised of 60-90 wt% of ethylene, 10-40 wt% of vinyl acetate.

The insulation layer is made of ethylene-propylene rubber comprised of: ethylene 60-80 wt%, propylene40-20 wt%, and diene 3-5 wt%.

This current conductor increases the stability of operation in high humidity conditions, the elasticity of the insulation and other layers operating at high temperatures up to 150 °C and the quality of the current conductor preventing semi-conductive layers inside insulation, which prevents delamination of current conductor layers and finally improves its integrity.

### Brief Description of Drawings

Fig. 1 shows a current conductor in cross-section for use in premises.
Fig. 2 shows a current conductor in cross-section for use in a non-protected natural environment (beyond premises).

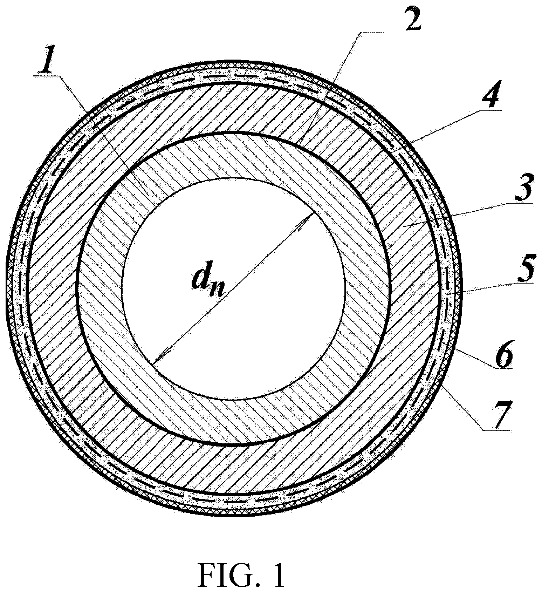

The current conductor (Fig. 1) intended for use in closed premises is a conditionally internal current conductor. The current conductor contains a copper or aluminum tubular conductor 1 located in insulation layers that are interconnected and concentrically located from the center of the conductor 1 to the outside. The conductor 1 is made of an aluminum or copper tube whereas the aluminum tube has a wall thickness within 10-25 mm, and the copper tube has a wall thickness within 7-20 mm. For these conductors, the outer diameter of the current conductor is within 50.00-100.00 mm and its basic determinant dimension is its internal diameter *dc* of the tubular conductor 1. This diameter defines the dimensions of the conductor internal cavity that affects its operation. The following elements are concentrically located around the tubular conductor 1: internal semi-conductive layer 2, 0.2-2.0 mm thick, made of ethylene-vinyl acetate comprising: ethylene 60-90 wt% and vinyl acetate 10-40 wt%, then the insulation layer 4, 5-30 mm thick, made of ethylene-propylene rubber, comprising 60-80 wt% ethylene, 40-20 wt% propylene, and diene 3-5 wt%, followed by internal and outer semi-conductive layers that are made of ethylene-vinyl acetate comprised of ethylene 60-90 wt% and vinyl acetate 10-40 wt% (diene is unsaturated aliphatic hydrocarbon).

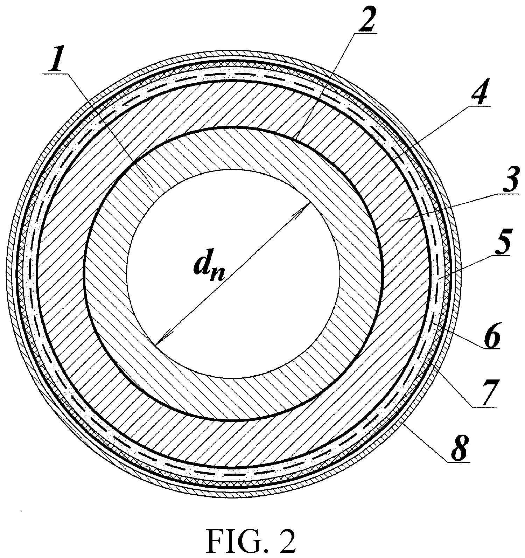

The semi-conductive layer 4 is followed by the layer 5 made of cured epoxy resin where the grounding element 6 is located, which is made as a copper perforated shell. The layer 5 made of cured epoxy resin is tightly covered by a protective sheath 7 on the outside. All current-conducting layers are in a cured static condition. The conductor 1, all current conductor layers and the grounding element 6 are interconnected by adhesion of their adjacent surfaces and compressed by a protective sheath 7 by forces directed to the center of the current conductor. Compression is done to ensure the specified density of interacting layers of the current conductor. These compression forces are obtained during current conductor manufacturing. For this purpose, the sheath 7 is made of a heat-shrink material having a hose shape in the initial position (before using in current conductor manufacturing) forming a strong and hard layer of the current conductor sheath during heating and further cooling. The current conductor (Fig. 2) is designed for using beyond closed premises and therefore it is an outdoor conductor. This current conductor has all attributes of a current conductor shown in Fig. 1 whereas the outdoors current conductor is made with two protective layers, one of which is the protective sheath 7 described above and made of a heat-shrink material, and the second layer 8 is made of a pipe made of non-magnetic metal. This layer 8 is located around the protective sheath 7 and is an external protective layer of the current conductor.

The current conductor operates as follows. When current passes through the current conductor, it is heated, expanded, elongated, and subjected to known mechanical, temperature, chemical, and hydraulic loads, whereas during the operation of the current conductor, the electrical field is straightened in the material of the insulation layer 4 having a thickness of 5-30 mm of ethylene-propylene rubber containing ethylene 60-80 wt% and propylene 40-20 wt%. Due to the straightening of the electrical field in the insulation layer material, in places where the external semiconductive layer ends, the electrical field is also straightened, which has a positive effect on the improvement of the operation reliability of the current conductor. Using a non-hygroscopic, hard and elastic dielectric with improved heat resistance as insulation allows preventing delamination of current conductor layers, ensuring the tightness of layers in connection points, preventing a breakthrough of insulation due to moisture getting inside it, and also preventing the impact of errors of poor installation on the operation of the current conductor by means of facilitating the process of formation of the conductor path. The insulation layer material rated for the specified temperature insulation limit prevents the probability of a breakthrough of the insulation layer that is in practice proven to occur due to abnormal operating conditions and poor quality of installation.

The current conductor design having a simplified structure enabled reducing labor input for its manufacturing by using a more elastic insulation material in it and no internal semi-conductive layers. The simplified design allowed manufacturing linear elongated workpieces in a more efficient way and trimming it into sections. The section is followed by the installation of a grounding element and a heat-shrink sleeve that is then heated and cooled down, with a metallic heath installed on each section if necessary. After these activities, the conductor sections are bent as per the path configuration, ends of conductors and insulation are treated and then interconnected. A simpler design of the current conductor allowed sufficiently improving its reliability by avoiding the impact of multiple structural components upon the current conductor operation.

## Claims

1. A current conductor made of a tubular conductor located in insulation layers interconnected and concentrically located around a conductor, in sequence from the conductor center, **characterized in that** the outer surface of the conductor provides an internal semi-conductive layer of ethylene-vinyl acetate, the internal semi-conductive layer provides an insulation layer made of ethylene-propylene rubber, the insulation layer provides an outer semi-conductive layer of ethylene-vinyl acetate where a layer of epoxy resin is located, which is cured to elasticity and flexibility, the epoxy resin layer provides a grounding element made as a copper perforated shell, the epoxy resin layer on the outside provides a protective sheath enclosing this layer under pressure, whereas all layers of the current conductor and the grounding element are interconnected and compressed by the protective sheath by forces directed to the center of the current conductor.

2. The current conductor according to claim 1 **characterized in that** the protective sheath is made of a heat-shrink material and forms an external layer of a current conductor.

3. The current conductor according to claim 1 **characterized in that** the protective sheath is made from a heat-shrink material and a tubular element is made of a non-magnetic material.

4. The current conductor according to claim 1 **characterized in that** the thickness of the conductor wall is 7.0-25 mm whereas its internal diameter is 50-100 mm, the internal and outer semi-conductive layers have a thickness of 0.2-2.0 mm, and the insulation layer has a thickness of 5-30 mm.

5. The current conductor according to claim 1 **characterized in that** the internal and external semi-conductive layers are made of ethylene-vinyl acetate comprised of ethylene 60-90 wt% and vinyl acetate 10-40 wt%.

6. The current conductor according to claim 1 **characterized in that** the insulation layer is made of ethylene-propylene rubber comprised of ethylene 60-80 wt%, propylene 40-20 wt%, and diene 3-5 wt%.

## Patentansprüche

1. Ein Stromleiter aus einem röhrenförmigen Leiter, der sich in Isolierschichten befindet, die miteinander verbunden und nacheinander von der Leitermitte aus konzentrisch um einen Leiter herum angeordnet sind, ist **dadurch gekennzeichnet, dass** die Außenfläche des Leiters eine innere halbleitende Schicht aus Ethylen-Vinylacetat bildet, die innere halbleitende Schicht eine Isolationsschicht aus Ethylen-Propylen-Kautschuk bildet, die Isolationsschicht eine äußere halbleitende Schicht aus Ethylen-Vinylacetat bildet, auf der sich eine Schicht aus Epoxidharz befindet und ausgehärtet ist, um Elastizität und Flexibilität zu gewährleisten, die Epoxidharzschicht ein Erdungselement in Form einer perforierten Kupferhülle bildet, die Epoxidharzschicht auf der Außenseite eine Schicht bildet, welche den Schutzmantel unter Druck umschließt, wobei alle Schichten des Stromleiters und des Erdungselements miteinander verbunden sind und vom Schutzmantel durch Kräfte, die direkt auf die Mitte des Stromleiters gerichtet sind, komprimiert werden.

2. Stromableiter nach Anspruch 1, **dadurch gekennzeichnet, dass** die Schutzhülle aus einem Wärmeschrumpfmaterial besteht und eine äußere Schicht eines Stromableiters bildet.

3. Stromableiter nach Anspruch 1, **dadurch gekennzeichnet, dass** die Schutzhülle aus einem Wärmeschrumpfmaterial und einem Röhrenelement aus nicht magnetischem Material besteht.

4. Stromleiter nach Anspruch 1, **dadurch gekennzeichnet, dass** die Dicke der Leiterwand 7,0-25 mm beträgt, während ihr Innendurchmesser 50-100 mm beträgt, die innere und die äußere Halbleiterschicht eine Dicke von 0,2-2,0 mm haben und die Isolationsschicht eine Dicke von 5-30 mm hat.

5. Stromleiter nach Anspruch 1, **dadurch gekennzeichnet, dass** die inneren und äußeren halbleitenden Schichten aus Ethylen-Vinylacetat hergestellt sind und aus 60-90 Gew.-% Ethylen und 10-40 Gew.-% Vinylacetat bestehen.

6. Stromleiter nach Anspruch 1, **dadurch gekennzeichnet, dass** die Isolierschicht aus Ethylen-Propylen-Kautschuk hergestellt ist und aus Ethylen 60-80 Gew. %, Propylen 40-20 Gew. % und Dien 3-5 Gew. % besteht.

## Revendications

1. Conducteur de courant constitué d'un conducteur tubulaire situé dans des couches d'isolation interconnectées et situées concentriquement autour d'un conducteur, successivement à partir du centre de conducteur, **caractérisé en ce que** la surface externe du conducteur fournit une couche interne semi-conductrice d'éthylène-acétate de vinyle, la couche interne semi-conductrice fournit une couche d'isolation constituée de caoutchouc éthylène-propylène, la couche d'isolation fournit une couche semi-conductrice externe d'éthylène-acétate de vinyle où une couche de résine époxy est située, qui est durcie jusqu'à élasticité et flexibilité, la couche de résine époxy fournit un élément de masse fabriqué en tant qu'enveloppe perforée de cuivre, la couche de résine époxy sur l'extérieur fournit une gaine de protection enfermant cette couche sous pression, alors que toutes les couches du conducteur de courant et de l'élément de masse sont interconnectées et compressées par la gaine de protection par des forces dirigées vers le centre du conducteur de courant.

2. Conducteur de courant selon la revendication 1 **caractérisé en ce que** la gaine de protection est constituée d'un matériau thermorétractable et forme une couche externe d'un conducteur de courant.

3. Conducteur de courant selon la revendication 1 **caractérisé en ce que** la gaine de protection est constituée d'un matériau thermorétractable et un élément tubulaire est constitué d'un matériau non magnétique.

4. Conducteur de courant selon la revendication 1 **caractérisé en ce que** l'épaisseur de la paroi de conducteur va de 7,0 à 25 mm alors que son diamètre interne va de 50 à 100 mm, les couches semi-conductrices interne et externe ont une épaisseur de 0,2 à 2,0 mm, et la couche d'isolation a une épaisseur de 5 à 30 mm.

5. Conducteur de courant selon la revendication 1 **caractérisé en ce que** les couches semi-conductrices interne et externe sont constituées d'éthylène-acétate de vinyle constitué de 60 à 90 % en poids et de 10 à 40 % en poids d'acétate de vinyle.

6. Conducteur de courant selon la revendication 1 **caractérisé en ce que** la couche d'isolation est constituée de caoutchouc éthylène-propylène constitué de 60 à 80 % en poids d'éthylène, 40 à 20 % en poids de propylène, et 3 à 5 % en poids de diène.
